# EUROPÄISCHE PATENTANMELDUNG

(11) **EP 4 420 900 A1**
(43) Veröffentlichungstag der Anmeldung: **28.08.2024**
(21) Anmeldenummer: 24153289.4
(22) Anmeldetag: 22.01.2024
(51) Int. Cl.: B60D 1/155, A01B 59/042, B60D 1/44

(54) **KUPPLUNGSANORDNUNG FÜR EINEN LANDWIRTSCHAFTLICHEN TRAKTOR**

(30) Priorität: 27.02.2023 DE 102023104695
(71) Anmelder: Deere & Company, Moline, IL 61265 (US)
(72) Erfinder: ECKSTEIN, CHRISTIAN, 68163 Mannheim (DE); HEITLINGER, MARTIN, 68163 Mannheim (DE); SPOHN, BENJAMIN, 68163 Mannheim (DE); PATINO, MARIO, 68163 Mannheim (DE)
(74) Vertreter: Dehnhardt, Florian Christopher

(57) **Zusammenfassung**

Eine Kupplungsanordnung (10) für einen landwirtschaftlichen Traktor (12) umfasst eine Zugstange (16) mit einem ersten Stangenabschnitt (22), der in einer Halterung (26) zur Anbringung auf einer Unterseite (38) eines Differentialgehäuses (40) des landwirtschaftlichen Traktors (12) längsverschiebbar gelagert ist, und einen dem ersten Stangenabschnitt (22) gegenüberliegenden zweiten Stangenabschnitt (24), der innerhalb angrenzender oberer und unterer Stützwangen (42, 44) einer zur heckseitigen Anbringung am landwirtschaftlichen Traktor (12) vorgesehenen Kupplungsträgerplatte (50) längsverschiebbar geführt ist. Die Zugstange (16) lässt sich durch Längsverschiebung in mehrere Kupplungspositionen (18, 20) verbringen und darin gegenüber der Kupplungsträgerplatte (50) mittels wenigstens eines Sicherungselements (78) arretieren.

## Beschreibung

Die Erfindung betrifft eine Kupplungsanordnung für einen landwirtschaftlichen Traktor, mit einer Zugstange, die sich ihrer Länge nach in verschiedene Kupplungspositionen verbringen und darin arretieren lässt.

Eine derartige Kupplungsanordnung ist beispielsweise bei landwirtschaftlichen Traktoren des Herstellers John Deere bekannt. Diese umfasst eine Zugstange mit einem ersten Stangenabschnitt und einem dem ersten Stangenabschnitt gegenüberliegenden zweiten Stangenabschnitt. Der erste Stangenabschnitt ist in einer Halterung auf der Unterseite eines Differentialgehäuses des landwirtschaftlichen Traktors gelagert und darin mittels eines abnehmbaren Zapfens, der sich durch eine in dem ersten Stangenabschnitt ausgebildete Bohrung erstreckt und mit dem Differentialgehäuse verschraubt ist, befestigt. Des Weiteren weist der zweite Stangenabschnitt im Bereich einer eine Kupplungskugel tragenden Stirnplatte linke und rechte Gewindebohrungen zur Aufnahme zugehöriger Sechskantbolzen auf, mittels derer die Stirnplatte mit einer im Heckbereich des landwirtschaftlichen Traktor vorgesehenen Kupplungsträgerplatte verschraubt ist. Die Zugstange lässt sich durch Lösen des Zapfens sowie der beiden Sechskantbolzen in einer von zwei unterschiedlichen Kupplungspositionen montieren, sodass verschiedenen Betriebssituationen eines an der Kupplungskugel angebrachten Anbaugeräts Rechnung getragen werden kann. Konstruktionsbedingt wirken die beim Betrieb des Anbaugeräts an der Zugstange auftretenden Vertikalkräfte unmittelbar auf die mittels der beiden Sechskantbolzen hergestellte Schraubverbindung ein, sodass hier dementsprechend hohe Anzugsmomente erforderlich sind. Diese führen dazu, dass ein Umsetzen der Zugstange zwischen den beiden Kupplungspositionen nur mit entsprechend hohem Aufwand möglich ist und in der Regel einem Werkstattaufenthalt vorbehalten bleibt.

Es ist daher Aufgabe der vorliegenden Erfindung, eine Kupplungsanordnung der eingangs genannten Art hinsichtlich einer komfortablen Handhabung einer Zugstange beim Wechsel zwischen verschiedenen Kupplungspositionen zu optimieren.

Diese Aufgabe wird durch eine Kupplungsanordnung für einen landwirtschaftlichen Traktor mit den Merkmalen des Patentanspruchs 1 gelöst.

Die Kupplungsanordnung für einen landwirtschaftlichen Traktor umfasst eine Zugstange mit einem ersten Stangenabschnitt, der in einer Halterung zur Anbringung auf einer Unterseite eines Differentialgehäuses des landwirtschaftlichen Traktors längsverschiebbar gelagert ist, und einen dem ersten Stangenabschnitt gegenüberliegenden zweiten Stangenabschnitt, der innerhalb angrenzender oberer und unterer Stützwangen einer zur heckseitigen Anbringung am landwirtschaftlichen Traktor vorgesehenen Kupplungsträgerplatte längsverschiebbar geführt ist. Die Zugstange lässt sich durch Längsverschiebung in mehrere Kupplungspositionen verbringen und darin gegenüber der Kupplungsträgerplatte mittels wenigstens eines Sicherungselements arretieren.

Die Führung der Zugstange im Bereich des zweiten Stangenabschnitts mittels der beiden Stützwangen bzw. daran ausgebildeter oberer und unterer Gleitflächen stellt sicher, dass die beim Betrieb des Anbaugeräts an der Zugstange auftretenden Vertikalkräfte unmittelbar in die Kupplungsträgerplatte eingeleitet werden können. Damit stehen diese nicht länger in Zusammenhang mit den zur Arretierung der Zugstange an dem wenigsten einen Sicherungselement aufzubringenden Betätigungskräften, sodass sich letztere durch entsprechende Wahl bzw. konstruktive Ausführung des wenigstens einen Sicherungselements hinsichtlich einer komfortablen Handhabung der Zugstange beim Wechsel zwischen ihren verschiedenen Kupplungspositionen optimieren lassen.

Vorteilhafte Weiterbildungen der erfindungsgemäßen Kupplungsanordnung gehen aus den Unteransprüchen hervor.

Vorzugsweise weist das wenigstens eine Sicherungselement einen gewindelosen Sicherungsbolzen auf, der sich zur Arretierung der Zugstange durch in der Kupplungsträgerplatte sowie dem zweiten Stangenabschnitt ausgebildete miteinander fluchtende Positionieröffnungen hindurchführen lässt, sodass eine Längsverschiebung der Zugstange verlässlich blockiert wird. Die Positionieröffnungen verlaufen hierzu im Wesentlichen senkrecht zur Längserstreckung der Zugstange, wobei mehrere Positionieröffnungen beabstandet entlang des zweiten Stangenabschnitts entsprechend einer jeweils zugehörigen Kupplungsposition der Zugstange vorgesehen sein können.

An dem Sicherungsbolzen kann ein umlaufender Kragen ausgebildet sein, der in montiertem Zustand an einer Oberseite der Kupplungsträgerplatte bzw. eines daran hervorspringenden oberen Befestigungsauges anliegt. Ein freies Ende des Sicherungsbolzens tritt auf einer Unterseite der Kupplungsträgerplatte bzw. eines daran hervorspringenden unteren Befestigungsauges aus und ist dort beispielsweise mittels eines abnehmbaren Splints gegen Herausfallen gesichert. Der Sicherungsbolzen lässt sich zum Wechsel der Kupplungsposition von Hand und damit werkzeuglos entfernen bzw. wiedereinsetzen.

Um die beim Betrieb eines Anbaugeräts an der Zugstange auftretenden Zugkräfte möglichst gleichmäßig in die Kupplungsträgerplatte einleiten zu können, besteht die Möglichkeit, dass an einer am zweiten Stangenabschnitt ausgeformten Stirnplatte linke und rechte Positionieröffnungen zur Aufnahme eines jeweiligen Sicherungsbolzens vorgesehen sind, wobei diese mit entsprechenden linken und rechten Positionieröffnungen in der Kupplungsträgerplatte korrespondieren. Die Stirnplatte weist typischerweise einen balkenförmigen Verlauf quer zur Längserstreckung der Zugstange auf, wobei sich die Positionieröffnungen jeweils an gegenüberliegenden linken und rechten Balkenenden befinden.

Ferner ist es denkbar, dass die Halterung ein in ein Langloch des ersten Stangenabschnitts eingreifendes Führungselement zur Begrenzung des Umfangs der Längsverschiebung aufweist. Das Langloch erlaubt es, die Zugstange nach Lösen des wenigstens einen Sicherungselements zwischen den einzelnen Kupplungspositionen definiert zu verschieben.

Dabei ist es denkbar, dass das Langloch zum freien Ende des ersten Stangenabschnitts hin offen ist. Dies macht es möglich, die Zugstange nach Lösen des wenigstens einen Sicherungselements vollständig aus der Halterung herauszuziehen und gegebenenfalls gegen eine andere auszutauschen. Dies bietet sich insbesondere bei Verwendung von mit unterschiedlichen Kupplungselementen ausgestatteten Zugstangen an.

Zusätzlich oder alternativ kann vorgesehen sein, dass an der Kupplungsträgerplatte linke und rechte Kufen zur Aufnahme in einem Schienensystemträger eines Traktorkupplungssystems ausgebildet sind. Der Schienensystemträger weist typischerweise die Gestalt eines im Heckbereich des landwirtschaftlichen Traktors an einem Differentialgehäuse montierten Anhängebocks auf. Der Anhängebock umfasst linke und rechte Rasterschienen, in die sich die Kufen der Kupplungsträgerplatte einführen und verriegeln lassen. Daneben können in den Rasterschienen weitere Kupplungseinrichtungen höhenverstellbar aufgenommen sein, beispielsweise ein auf einem Trägerschlitten montiertes Kupplungsmaul.

Bevorzugt ist der zweite Stangenabschnitt zumindest entlang eines zulässigen Verschiebebereichs schubladenartig durch eine mit dessen Außenkontur korrespondierende Einschuböffnung und damit formschlüssig innerhalb der Kupplungsträgerplatte hindurchgeführt. Dies stellt sicher, dass die bei angebrachtem Anbaugerät am zweiten Stangenabschnitt auftretenden Querkräfte sowohl in vertikaler wie auch horizontaler Richtung verlässlich in die umgebende Kupplungsträgerplatte eingeleitet werden, sodass auf das wenigstens eine Sicherungselement im Wesentlichen nur die an der Zugstange bezüglich ihrer Längserstreckung angreifenden Zugkräfte bzw. Zugkraftkomponenten einwirken.

An dem zweiten Stangenabschnitt kann ein Kupplungselement, beispielsweise in Gestalt eines Kugelkopfs, angebracht sein. Üblicherweise handelt es sich um einen sogenannten K80-Kugelkopf, der der Anbringung einer komplementären Kugelpfanne einer Anbaugerätekupplung dient. Der Kugelkopf kann hierbei an dem zweiten Stangenabschnitt für die Zwecke eines wartungs- bzw. verschleißbedingten Austauschs abnehmbar montiert sein.

Die Stützwangen sind im einfachsten Fall durch die an den zweiten Stangenabschnitt angrenzenden Stirnseiten der Kupplungsträgerplatte gebildet. Zur Vergrößerung der Anlagefläche und damit der Belastbarkeit können die Stützwangen an der Kupplungsträgerplatte ausgeformte Führungsvorsprünge umfassen. Diese sind als bauliche Erweiterung der durch die beiden Stützwangen gebildeten oberen und unteren Gleitflächen bevorzugt einstückiger Bestandteil der als Stahlschmiedeteil hergestellten Kupplungsträgerplatte.

Die erfindungsgemäße Kupplungsanordnung für einen landwirtschaftlichen Traktor wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: eine perspektivische Ansicht eines Ausführungsbeispiels der erfindungsgemäßen Kupplungsanordnung im Heckbereich eines landwirtschaftlichen Traktors,
- Fig. 2: eine weitere perspektivische Ansicht der in Fig. 1 wiedergegebenen Kupplungsanordnung,
- Fig. 3: eine Seitenansicht der in Fig. 1 wiedergegebenen Kupplungsanordnung an einem Differentialgehäuse des landwirtschaftlichen Traktors,
- Fig. 4: eine seitliche Schnittansicht der in Fig. 3 wiedergegebenen Kupplungsanordnung,
- Fig. 5: eine Detailansicht einer Halterung zur Lagerung eines an einer Zugstange ausgebildeten ersten Stangenabschnitts, der entlang eines Langlochs in eine erste Kupplungsposition verbracht ist,
- Fig. 6: die in Fig. 5 wiedergegebene Halterung, wobei der erste Stangenabschnitt entlang des Langlochs in eine zweite Kupplungsposition verbracht ist,
- Fig. 7: eine Variante der Zugstange, bei der das Langloch zum freien Ende des ersten Stangenabschnitts hin offen ist, und
- Fig. 8: eine innerhalb einer Kupplungsträgerplatte der Kupplungsanordnung gemäß Fig. 1 ausgebildete Einschuböffnung zur längsverschiebbaren Aufnahme eines zweiten Stangenabschnitts der Zugstange.

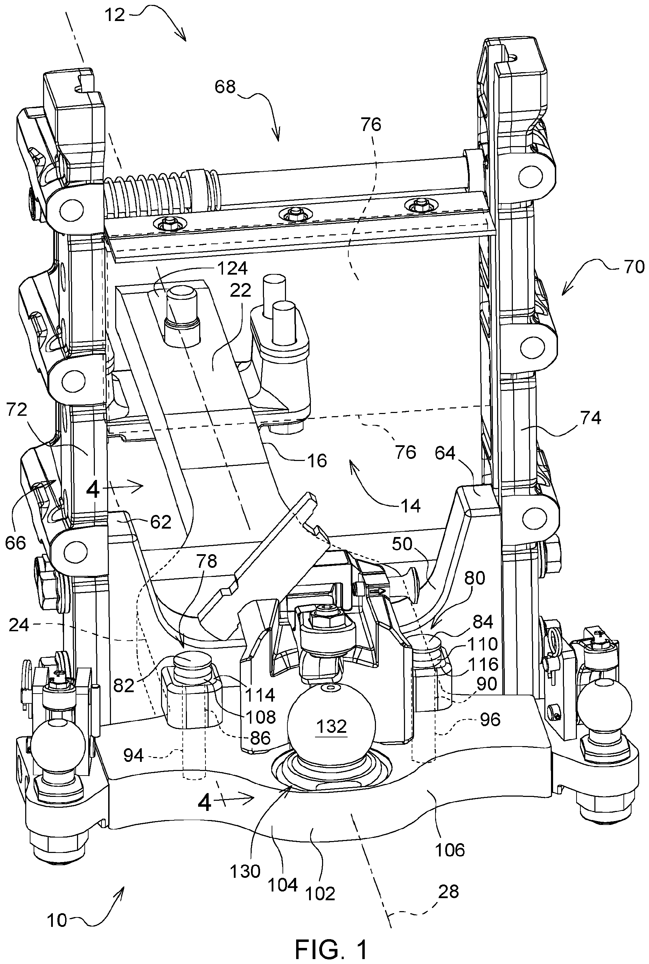

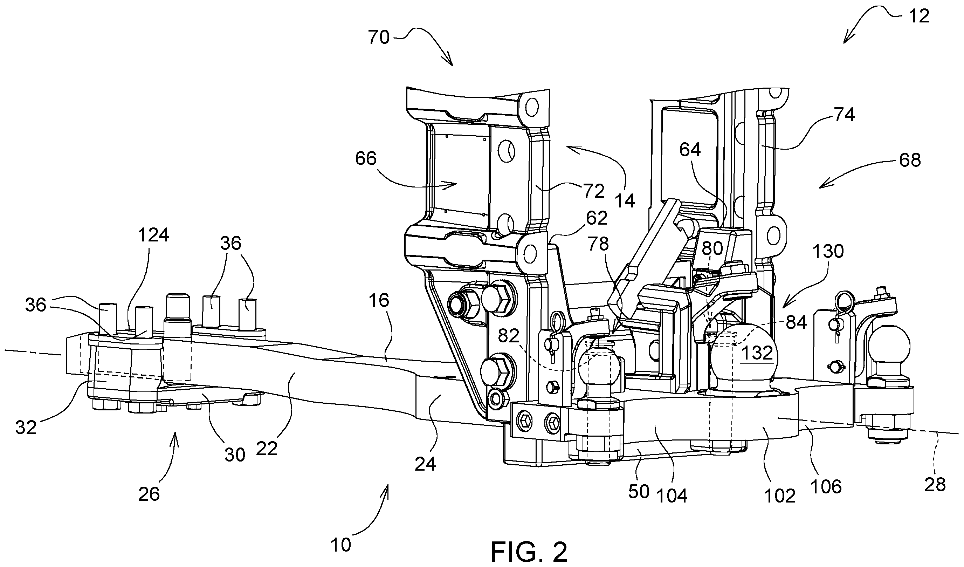

Fig. 1 und 2 zeigen verschiedene perspektivisch dargestellte Komplettansichten eines Ausführungsbeispiels der erfindungsgemäßen Kupplungsanordnung 10 für einen landwirtschaftlichen Traktor 12.

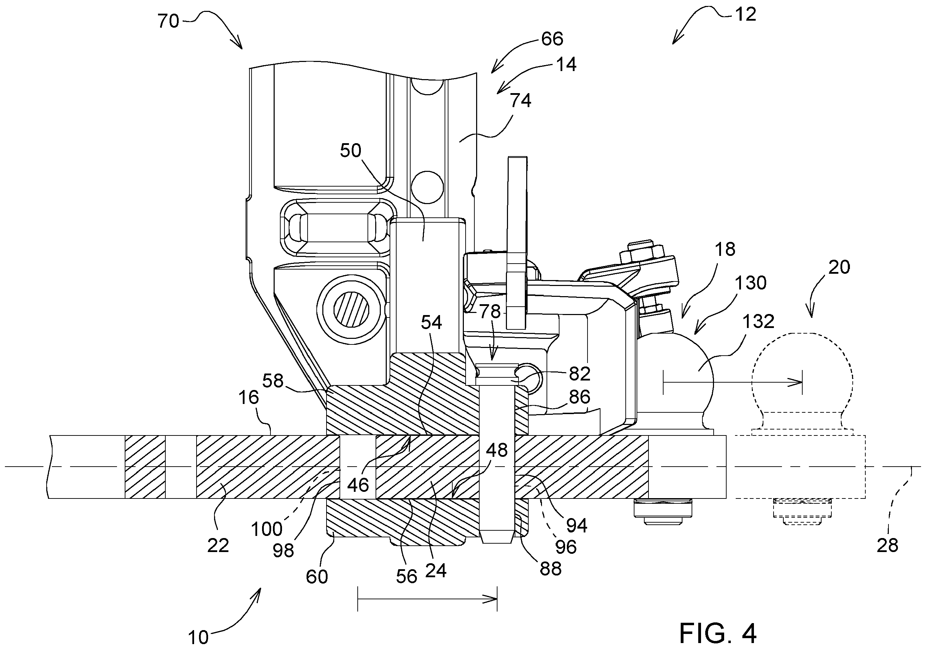

Die im Heckbereich 14 des (nicht näher dargestellten) landwirtschaftlichen Traktors 12 befindliche Kupplungsanordnung 10 umfasst eine Zugstange 16, die sich ihrer Länge nach in verschiedene Kupplungspositionen 18, 20 verbringen und darin arretieren lässt (siehe hierzu Fig. 4).

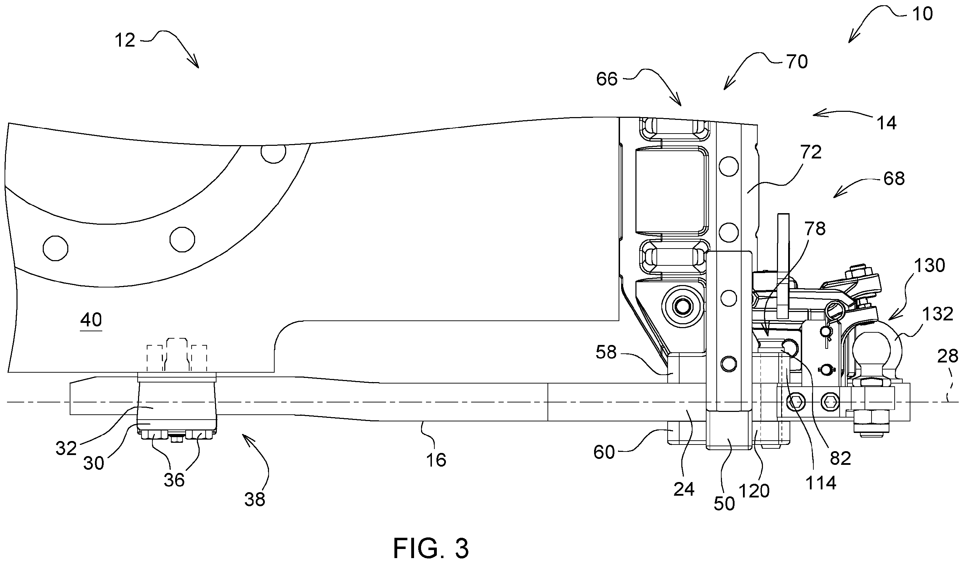

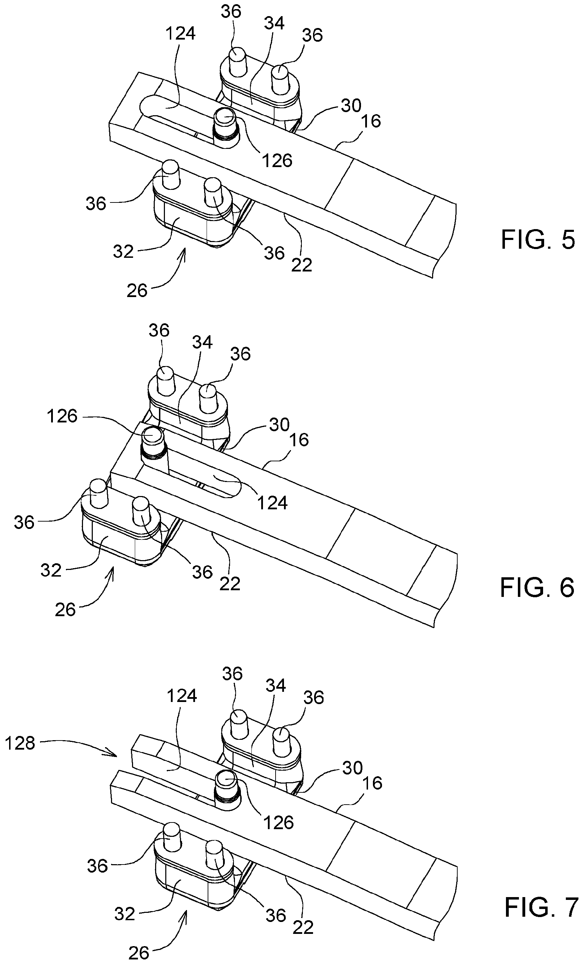

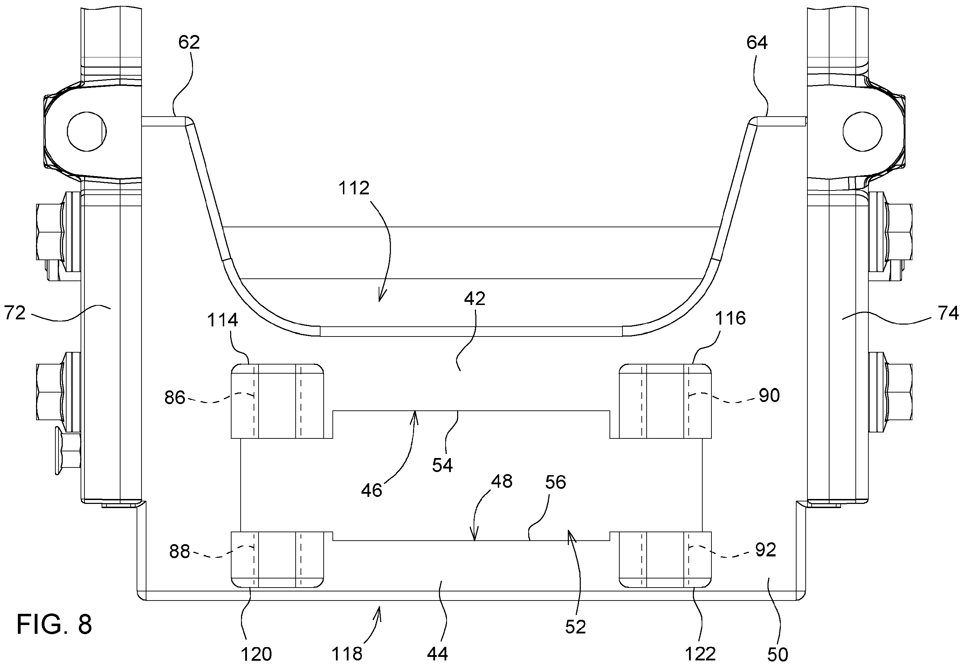

Die zungenförmig verlaufende und als Stahlschmiedeteil hergestellte Zugstange 16 weist einen ersten Stangenabschnitt 22 und einen dem ersten Stangenabschnitt 22 gegenüberliegenden zweiten Stangenabschnitt 24 auf. Der erste Stangenabschnitt 22 ist in einer kastenförmigen Halterung 26 längsverschiebbar gelagert. Wie in Fig. 2 bzw. den entsprechenden Detailansichten in Fig. 5 bis 7 zu erkennen ist, besteht die kastenförmige Halterung 26 aus einer quer zur Längserstreckung 28 der Zugstange 16 verlaufenden Stützplatte 30, die sich zwischen zwei Montageblöcken 32, 34 erstreckt und mittels mehrerer Gewindebolzen 36 auf einer Unterseite 38 eines Differentialgehäuses 40 des landwirtschaftlichen Traktors 12 montiert ist (siehe Fig. 3). Des Weiteren ist der zweite Stangenabschnitt 24 innerhalb angrenzender oberer und unterer Stützwangen 42, 44 bzw. daran ausgebildeter oberer und unterer Gleitflächen 46, 48 (siehe hierzu Fig. 8) einer zur heckseitigen Anbringung am landwirtschaftlichen Traktor 12 vorgesehenen Kupplungsträgerplatte 50 längsverschiebbar geführt.

Genauer gesagt ist der zweite Stangenabschnitt 24 zumindest entlang eines zulässigen Verschiebebereichs schubladenartig durch eine mit dessen Außenkontur korrespondierende Einschuböffnung 52 und damit formschlüssig innerhalb der Kupplungsträgerplatte 50 hindurchgeführt. Der Verlauf der Einschuböffnung 52 ist in Fig. 8 in Blickrichtung auf den Heckbereich 14 des landwirtschaftlichen Traktor 12 gezeigt.

Entsprechend Fig. 3 bzw. 4 sind die Stützwangen 42, 44 unter anderem durch die an den zweiten Stangenabschnitt 24 angrenzenden Stirnseiten 54, 56 der Kupplungsträgerplatte 50 gebildet. Zur Vergrößerung der Anlagefläche und damit der Belastbarkeit umfassen die 42, 44 an der Kupplungsträgerplatte 50 ausgeformte Führungsvorsprünge 58, 60. Diese sind als bauliche Erweiterung der durch die beiden Stützwangen 42, 44 gebildeten oberen und unteren Gleitflächen 46, 48 einstückiger Bestandteil der als Stahlschmiedeteil hergestellten Kupplungsträgerplatte 50.

Des Weiteren sind an der Kupplungsträgerplatte 50 linke und rechte Kufen 62, 64 zur Aufnahme in einem Schienensystemträger 66 eines Traktorkupplungssystems 68 ausgebildet. Der Schienensystemträger 66 weist die Gestalt eines im Heckbereich 14 des landwirtschaftlichen Traktors 12 an dem Differentialgehäuse 40 montierten Anhängebocks 72 auf (siehe Fig. 1 und 2). Der Anhängebock 72 umfasst linke und rechte Rasterschienen 72, 74, in die die Kufen 62, 64 der Kupplungsträgerplatte 50 eingeführt und verriegelt sind. Daneben kann in den Rasterschienen 72, 74 eine lediglich strichliniert angedeutete weitere Kupplungseinrichtung 76 höhenverstellbar aufgenommen sein, beispielsweise ein auf einem Trägerschlitten montiertes Kupplungsmaul.

Wie anhand der Schnittdarstellung der Kupplungsanordnung 10 in Fig. 4 erkennbar ist, lässt sich die Zugstange 16 durch Längsverschiebung in eine der Kupplungspositionen 18, 20 verbringen und darin gegenüber der Kupplungsträgerplatte 50 mittels zugehöriger Sicherungselemente 78, 80 arretieren. Beispielsgemäß sind zwei Kupplungspositionen 18, 20 vorgesehen, es kann sich aber auch um eine beliebige andere Anzahl mit gegebenenfalls abweichender Rasterung handeln.

Jedes der Sicherungselemente 78, 80 weist einen gewindelosen Sicherungsbolzen 82, 84 auf, der sich zur Arretierung der Zugstange 16 durch in der Kupplungsträgerplatte 50 sowie dem zweiten Stangenabschnitt 24 ausgebildete miteinander fluchtende Positionieröffnungen 86, 88, 90, 92, 94, 96, 98, 100 hindurchführen lässt, sodass eine Längsverschiebung der Zugstange 16 blockiert wird (siehe Fig. 4). Die Positionieröffnungen 86, 88, 90, 92, 94, 96, 98, 100 verlaufen hierzu im Wesentlichen senkrecht zur Längserstreckung 28 der Zugstange 16, wobei mehrere Positionieröffnungen 94, 96, 98, 100 beabstandet entlang des zweiten Stangenabschnitts 24 entsprechend einer jeweils zugehörigen Kupplungsposition 18, 20 der Zugstange 16 vorgesehen sind.

Genauer gesagt sind an einer am zweiten Stangenabschnitt 24 ausgeformten Stirnplatte 102 linke und rechte Positionieröffnungen 94, 96, 98, 100 zur Aufnahme eines jeweiligen Sicherungsbolzens 82, 84 vorhanden, wobei diese mit entsprechenden linken und rechten Positionieröffnungen 86, 88, 90, 92 in der Kupplungsträgerplatte 50 korrespondieren. Zu erkennen sind in Fig. 4 nur die linken Positionieröffnungen 86, 88, 94, 96, die in Blickrichtung dahinter liegenden rechten Positionieröffnungen 90, 92, 98, 100 sind in der gewählten Ansicht verdeckt und durch strichlinierte Bezugslinien angedeutet.

Die Stirnplatte 102 weist einen balkenförmigen Verlauf quer zur Längserstreckung 28 der Zugstange 16 auf, wobei sich die Positionieröffnungen 94, 96, 98, 100 jeweils an gegenüberliegenden linken und rechten Balkenenden 104, 106 befinden.

An jedem der Sicherungsbolzen 82, 84 ist ein umlaufender Kragen 108, 110 ausgebildet, der in montiertem Zustand an einer Oberseite 112 der Kupplungsträgerplatte 50 bzw. daran hervorspringender oberer linker und rechter Befestigungsaugen 114, 116 anliegt (siehe Fig. 1 und 8). Ein jeweiliges freies Ende der Sicherungsbolzen 82, 84 tritt auf einer Unterseite 118 der Kupplungsträgerplatte 50 bzw. daran hervorspringender unterer linker und rechter Befestigungsaugen 120, 122 aus und ist dort jeweils mittels eines (nicht gezeigten) abnehmbaren Splints oder dergleichen gegen Herausfallen gesichert. Jeder der beiden Sicherungsbolzen 82, 84 lässt sich zum Wechsel der Kupplungsposition 18, 20 von Hand und damit werkzeuglos entfernen bzw. wiedereinsetzen.

Gemäß Fig. 5 und 6 weist die Halterung 26 ein in ein Langloch 124 des ersten Stangenabschnitts 22 eingreifendes Führungselement 126 zur Begrenzung des Umfangs der Längsverschiebung auf. Das Langloch 124 erlaubt es, die Zugstange 16 nach Lösen der beiden Sicherungsbolzen 82, 84 zwischen der ersten Kupplungsposition 18 (siehe Fig. 5) und der zweiten Kupplungsposition 20 (siehe Fig. 6) definiert zu verschieben.

Ausgehend von der in Fig. 7 wiedergegebenen Variante der Zugstange 16, ist das Langloch 124 zum freien Ende 128 des ersten Stangenabschnitts 22 hin offen. Dies macht es möglich, die Zugstange 16 nach Lösen der Sicherungsbolzen 82, 84 vollständig aus der Halterung 26 herauszuziehen und gegebenenfalls gegen eine andere auszutauschen. Dies bietet sich insbesondere bei Verwendung von mit unterschiedlichen Kupplungselementen 130 ausgestatteten Zugstangen 16 an.

Beispielsgemäß ist an dem zweiten Stangenabschnitt 24 ein als Kugelkopf 132 ausgebildetes Kupplungselement 130 angebracht (siehe unter anderem Fig. 1). Vorliegend handelt es sich um einen sogenannten K80-Kugelkopf, der der Anbringung einer komplementären Kugelpfanne einer Anbaugerätekupplung dient. Der Kugelkopf 132 kann an dem zweiten Stangenabschnitt 24 für die Zwecke eines wartungs- bzw. verschleißbedingten Austauschs abnehmbar montiert sein.

## Patentansprüche

1. Kupplungsanordnung für einen landwirtschaftlichen Traktor, umfassend eine Zugstange (16) mit einem ersten Stangenabschnitt (22), der in einer Halterung (26) zur Anbringung auf einer Unterseite (38) eines Differentialgehäuses (40) des landwirtschaftlichen Traktors (12) längsverschiebbar gelagert ist, und einen dem ersten Stangenabschnitt (22) gegenüberliegenden zweiten Stangenabschnitt (24), der innerhalb angrenzender oberer und unterer Stützwangen (42, 44) einer zur heckseitigen Anbringung am landwirtschaftlichen Traktor (12) vorgesehenen Kupplungsträgerplatte (50) längsverschiebbar geführt ist, **dadurch gekennzeichnet, dass** sich die Zugstange (16) durch Längsverschiebung in mehrere Kupplungspositionen (18, 20) verbringen und darin gegenüber der Kupplungsträgerplatte (50) mittels wenigstens eines Sicherungselements (78, 80) arretieren lässt.

2. Kupplungseinrichtung nach Anspruch 1, **dadurch gekennzeichnet, dass** das wenigstens eine Sicherungselement (78, 80) einen gewindelosen Sicherungsbolzen (82, 84) aufweist, der sich zur Arretierung der Zugstange (16) durch in der Kupplungsträgerplatte (50) sowie dem zweiten Stangenabschnitt (24) ausgebildete miteinander fluchtende Positionieröffnungen (86, 88, 90, 92, 94, 96, 98, 100) hindurchführen lässt, sodass eine Längsverschiebung der Zugstange (16) blockiert wird.

3. Kupplungseinrichtung nach Anspruch 2, **dadurch gekennzeichnet, dass** an dem Sicherungsbolzen (82, 84) ein umlaufender Kragen (108, 110) ausgebildet ist, der in montiertem Zustand an einer Oberseite (112) der Kupplungsträgerplatte (50) bzw. eines daran hervorspringenden oberen Befestigungsauges (114, 116) anliegt.

4. Kupplungseinrichtung nach Anspruch 2 oder 3, **dadurch gekennzeichnet, dass** an einer am zweiten Stangenabschnitt (24) ausgeformten Stirnplatte (102) linke und rechte Positionieröffnungen (94, 96, 98, 100) zur Aufnahme eines jeweiligen Sicherungsbolzens (86, 88, 90, 92) vorgesehen sind, wobei diese mit entsprechenden linken und rechten Positionieröffnungen (88, 90) in der Kupplungsträgerplatte (50) korrespondieren.

5. Kupplungseinrichtung nach wenigstens einem der vorhergehenden Ansprüche, **dadurch gekennzeichnet, dass** die Halterung (26) ein in ein Langloch (124) des ersten Stangenabschnitts (22) eingreifendes Führungselement (126) zur Begrenzung des Umfangs der Längsverschiebung aufweist.

6. Kupplungseinrichtung nach Anspruch 5, **dadurch gekennzeichnet, dass** das Langloch (124) zum freien Ende (128) des ersten Stangenabschnitts (22) hin offen ist.

7. Kupplungseinrichtung nach wenigstens einem der vorhergehenden Ansprüche, **dadurch gekennzeichnet, dass** an der Kupplungsträgerplatte (50) linke und rechte Kufen (62, 64) zur Aufnahme in einem Schienensystemträger (66) eines Traktorkupplungssystems (68) ausgebildet sind.

8. Kupplungseinrichtung nach wenigstens einem der vorhergehenden Ansprüche, **dadurch gekennzeichnet, dass** der zweite Stangenabschnitt (24) schubladenartig durch eine mit dessen Außenkontur korrespondierende Einschuböffnung (52) innerhalb der Kupplungsträgerplatte (50) hindurchgeführt ist.

9. Kupplungseinrichtung nach wenigstens einem der vorhergehenden Ansprüche, **dadurch gekennzeichnet, dass** an dem zweiten Stangenabschnitt (24) ein Kupplungselement (130), beispielsweise in Gestalt eines Kugelkopfs (132), angebracht ist.

10. Kupplungseinrichtung nach wenigstens einem der vorhergehenden Ansprüche, **dadurch gekennzeichnet, dass** die Stützwangen (42, 44) an der Kupplungsträgerplatte (50) ausgeformte Führungsvorsprünge (58, 60) umfassen.
